# EUROPÄISCHE PATENTSCHRIFT

(11) **EP 2 063 135 B1**
(45) Veröffentlichungstag und Bekanntmachung des Hinweises auf die Patenterteilung: **16.07.2014**
(21) Anmeldenummer: 08019715.5
(22) Anmeldetag: 12.11.2008
(51) Int. Cl.: F16B 13/02

(54) **Spreizdübel**
Expansion anchor
Cheville à expansion

(30) Priorität: 15.11.2007 DE 202007015953 U
(43) Veröffentlichungstag der Anmeldung: 27.05.2009
(73) Patentinhaber: KEW Kunststofferzeugnisse GmbH Wilthen, 02681 Wilthen (DE)
(72) Erfinder: Mager, Heiko, 01904 Neukirch (DE); Gedan, Eberhard, 02689 Sohland (DE); Steglich, Maik, 02681 Schirgiswalde (DE)
(74) Vertreter: Sperling, Thomas

(56) Entgegenhaltungen:
- EP-A1- 0 034 346
- US-A- 4 136 599
- US-A- 4 642 009

## Beschreibung

Die Erfindung betrifft einen Spreizdübel mit den Merkmalen entsprechend dem Oberbegriff nach Anspruch 1.

Es sind verschiedene Dübel, insbesondere Durchsteckdübel zum Einführen bzw.

Durchstecken eines Spreizmittels, wie einer Schraube oder eines Ankers mit Gewinde bekannt und auf dem Markt, die im wesentlichen einen zylindrischen Spreizteil mit einer optimierten Spreizzone aufweisen und unterschiedliche hohe Eindrehmomente erfordern sowie teilweise unzureichende Ausziehwiderstände aufweisen. Die Spreizzone ist in der Regel zweiteilig oder dreiteilig ausgebildet, d.h. die im Dübelmantel angeordneten Längsschlitze unterschiedlicher Geometrie bilden zwei oder drei Spreizelemente, die sich beim Eindrehen einer Schraube nach außen gegen die Wandung des Bohrloches spreizen. Beispielsweise wird in der DE 298 10 927 U1 ein Spreizdübel für Baubefestigungsuntergründe offenbart, der einen im wesentlichen zylindrischen Spreizteil mit gleichmäßig über dessen Umfang verteilte Längsschlitze aufweist, und wobei am Außenumfang des Spreizteiles keilförmige Vorsprünge zwischen den Längsschlitzen angeformt sind, zwischen denen Stabilisatorelemente angeordnet sind, und wobei im Inneren des Spreizdübels Versteifungsrippen angeformt sind.

Durch die gestaltete Innen- und Außengeometrie des Dübels werden niedrige Eindrehmomente der Schraube und durch eine optimale Umverteilung sowie Verdrängung des Dübelmateriales hohe Auszugskräfte beim Herausziehen erreicht. Aus der DE 10 2006 005 091 A1 geht ein Spreizdübel hervor, bei dem im Dübelmantel mehrere Schlitzanordnungen vorgesehen sind, die in Umfangsrichtung und in Achsrichtung versetzt angeordnet sind, wodurch unterschiedliche Hauptspreizrichtungen geschaffen werden, mit der eine gute Verankerung des Dübels erreicht werden soll.

Die US Patentanmeldung US 413599 offenbart eine einteilige Kunststoffschraube zur Aufnahme in eine Bohrung in einem Fasermaterial. Sie stellt eine angemessene Ausziehkraft bei einer minimalen axialen Ausdehnung des Verschlusses bereit. Ein solcher Verschluss umfasst einen Schaft mit einem ersten Teil an seinem Kopfende, welches im Wesentlichen komplementär zu dem Durchmesser der Bohrung ist, in dem sie eingesetzt wird. Ein Zwischenstück verjüngt sich zu einem freie Endabschnitt, der zunächst in die Bohrung mit eine geringeren Durchmesser als der erste Abschnitt eingefügt wird.

Das US Patent 4642009 offenbart einen Wanddübel entsprechend dem Oberbegriff nach Anspruch 1, der zum Befestigen von Gegenständen an hohlen Baumaterialien wie Panelen und hohlen Wänden geeignet ist. Der Wanddübel umfasst ein erstes Ende mit einer länglichen Bohrung, ein zweites Ende mit einer länglichen Bohrung, zwei Schenkel, die sich jeweils von einer Seite zum ersten Ende erstrecken und von der anderen Seite zum zweiten Ende erstrecken. Die zwei Schenkel haben jeweils zwei gegenüberliegende Flächen, die durch einen Schlitz getrennt sind, eine zentrale Region mit einem elliptischen Querschnittsprofil, das einen großen und einen kleinen Durchmesser aufweist, der allmählich kreisförmig wird.

Die Europäische Patentanmeldung 0 034 346 A1 offenbart einen Befestigungssatz zum Befestigen von Verkleidungen an einer Wand mittels eines Klemmkopfdübels aus Kunststoff. Bei einem aus einem Klemmkopfdübel aus Kunststoff und aus einem eintreibbaren Befestigungselement bestehenden Befestigungssatz zum Befestigen von Verkleidungen an einer Wand ist zur Vergrößerung der Haltekräfte nicht nur im unteren Abschnitt des Dübels eine entsprechende Spreizzone vorgesehen sondern eine weitere Spreizzone im oberen Abschnitt des Dübels, der im montierten Zustand in dem Loch des zu befestigenden Bauteiles zu liegen kommt; das zugehörige Befestigungselement besitzt in seinem dieser oberen Spreizzone zugeordneten oberen Abschnitt.

Der Erfindung liegt die Aufgabe zugrunde, einen Spreizdübel zu schaffen, mit dem eine Verbesserung des Spreizfußes auf den Befestigungsuntergrund erreichbar ist. Des Weiteren soll der Spreizdübel eine Verbesserung der Verbindung zwischen Spreizdübel und Bauteil bzw. Spreizdübel und Bauuntergrund ermöglichen.

Diese Aufgabe wird erfindungsgemäß durch einen Spreizdübel gemäß den Merkmalen des Anspruches 1 gelöst. Die Erfindung schlägt einen Spreizdübel 1 zur Befestigung von unterschiedlichen Baumaterialien und Bauteilen an verschiedenen Untergründen, wie Mauerwerk, Beton, Hohlkammerbaustoffe und dergleichen vor, umfassend unter anderem einen im wesentlichen rohrförmigen Hülsenkörper 10 mit axialem Durchgang 11 zur Aufnahme bzw. zum Durchstecken eines Spreizelementes 30, wie einer Schraube, eines Ankers und dergleichen, und wobei der Hülsenkörper 1 an seinem einen axialen Ende einen Schaftteil 12 und an seinem anderen axialen Ende einen Spreizteil 13 enthält, und wobei im Bereich des Spreizteiles 13 eine umfangmäßig verteilte Ausbauchung ausgebildet ist, und wobei die Wandstärke W des Spreizteiles 13 im Bereich der Ausbauchung zunimmt.

Mit der Erfindung wird im Anwendungsfall ein einstückig ausgebildeter Spreizdübel als Einsteckdübel bzw. Durchsteckdübel erreicht, bei dem es durch die erfindungsgemäße gestaltete bauchige Außenform zu einer verbesserten Verbindung zwischen dem Hülsenkörper und dem Befestigungsuntergrund und einer festen Verankerung in der Tiefe des Bohrloches des Untergrundes kommt.

Die bauchige Gestaltung des Spreizteiles hat eine Erhöhung des Spreizdruckes zur Folge und führt dazu, dass sich der Spreizdruck nicht unmittelbar an der Außenkante des Untergrundes sondern im Inneren ausbreiten kann, wodurch die Gefahr des Ausbrechens an der Oberfläche reduziert wird.

Vorteilhafte Weiterbildungen der Erfindung sind den kennzeichnenden Merkmalen der Unteransprüche und den Zeichnungen entnehmbar.

Nach der Erfindung weist der Spreizteil ein konisch verlaufendes Endstück auf, und wobei am Spreizteil äußere Umfangsprofilierungen angeordnet sind, und wobei zwischen den Umfangsprofilierungen mindestens zwei sich in Längserstreckung des Spreizteiles über dessen Länge erstreckende Längsschlitze ausgebildet sind, die bis in das Endstück des Spreizteiles hineinragen zwecks Erzielung einer entsprechenden Spreizwirkung und eines definierten Aufspreizens sowie Anpassung des Dübels an den jeweiligen Bauuntergrund.

Die Erfindung schlägt vor, dass zwischen den Umfangsprofilierungen drei oder fünf gleichmäßig über den Umfang verteilte sich in Längserstreckung des Spreizteiles über dessen Länge erstreckende Längsschlitze vorgesehen sind, und wobei die Längsschlitze bis in das Endstück des Spreizteiles hineinragen.

In einer weiteren vorteilhaften Ausführungsform der Erfindung enthalten die äußeren Umfangsprofilierungen des Spreizteiles gleichmäßig voneinander beabstandete ringförmige Verankerungsvorsprünge, zwischen denen ringförmige Nuten ausgebildet sind, wodurch eine segmentielle und hieraus resultierende bessere Anlagefläche des Spreizdübels an die Innenwand des Bohrloches des Untergrundes gegeben ist. Durch die konstruktive Gestaltung entstehen anpassungsfähige Lamellen, die sich unabhängig vom Bauuntergrund anpassen können und eine kraft- sowie formschlüssige Befestigung des Spreizdübels ermöglichen.

Eine Ausgestaltung der Erfindung sieht vor, dass der Schaftteil mindestens so lang wie der Spreizteil ausgebildet ist, woraus eine entsprechende Führung für das Spreizelement resultiert und ein seitliches Austreten des Spreizelementes verhinderbar ist.

In einer weiteren Ausgestaltung ist der Schaftteil kürzer als der Spreizteil ausgebildet.

Gemäß einem weiteren Vorschlag der Erfindung sind die sich in Längsrichtung des Spreizteiles erstreckenden Längsschlitze mit einem Häutchen versehen, welches die Längsschlitze teilweise oder ganz schließt, wodurch das Eindringen von Verunreinigungen des Bauuntergrundes in den Hülsenkörper vermeidbar sowie ein gezieltes gleichmäßiges Spreizen der Spreizzone möglich ist.

In einer vorteilhaften Ausbildung der Erfindung weist der Spreizteil an seinem Endstück eine mittige Öffnung auf, und wobei die mittige Öffnung dem Kerndurchmesser des Spreizelementes angepasst ausgebildet ist, wodurch das Spreizteil leichter von dem Spreizelement durchdrungen werden kann.

Die Erfindung schlägt vor, dass der Durchmesser des Spreizteiles des Spreizdübels in seiner Ausgangsform größer ist als der Durchmesser des Bohrloches des Untergrundes, wodurch eine Verbesserung des Spreizdruckes auf den Befestigungsuntergrund erreichbar ist.

In einer besonders bevorzugten vorteilhaften Ausführungsform weist der Schaftteil einen Fixierungsbereich auf, und wobei die Wandstärke des Schaftteiles im Fixierungsbereich abnimmt, wodurch Bauteile unterschiedlicher Dicke infolge der Verstärkung des Anpressdruckes näher und fester an den Bauuntergrund heranziehbar sind.

Es hat sich von Vorteil erwiesen, wenn an dem Schaftteil ein sich verjüngender konischer Übergangsteil im Übergang vom Fixierungsbereich zum Spreizteil ausgebildet ist, der einem verbesserten Einfädeln des Spreizelementes dient.

In bevorzugter Ausgestaltung ist der Fixierungsbereich im Mittelteil des Schaftteiles, vorzugsweise im Übergang zum Übergangsteil ausgebildet.

In vorteilhafter Weise besteht der Fixierungsbereich aus Gummi oder aus Metall, um den Anpressdruck zu erhöhen und das jeweils anzubringende Bauteil besser zentrisch um das Spreizelement fixieren zu können.

Die Erfindung schlägt weiterhin vor, dass das Häutchen bogenförmig ausgebildet ist, woraus sich infolge von Materialanhäufung das Häutchen mehr dehnen kann.

Die Erfindung soll nachfolgend anhand eines Ausführungsbeispieles und der Zeichnungen beispielhaft erläutert werden. Es zeigen:
- Figur 1: eine perspektivische Darstellung eines erfindungsgemäßen Spreizdübels mit einer umfangmäßigen Ausbauchung im Spreizteil
- Figur 2a: eine schematische Ansicht gemäß Figur 1
- Figur 2b: einen Längsschnitt A-A von Figur 2a
- Figur 3: eine perspektivische Darstellung einer weiteren Ausführungsform eines erfindungsgemäßen Spreizdübels mit einem Fixierungsbereich im Schaftteil
- Figur 4a: eine schematische Ansicht gemäß Figur 3
- Figur 4b: einen Längsschnitt B-B von Figur 4a
- Figur 5: eine weitere perspektivische Darstellung eines Spreizdübels mit einem Fixierungsbereich gemäß Figur 3
- Figur 6: eine schematische Ansicht gemäß Figur 5 mit einem Häutchen
- Figur 7: eine schematische Ansicht gemäß Figur 5 mit einer Öffnung im Spreizteil
- Figur 8: eine schematische Darstellung mit einem in den Untergrund einzusetzenden erfindungsgemäßen Spreizdübel
- Figur 9: eine schematische Darstellung eines erfindungsgemäßen Spreizdübels im eingesetzten Zustand
- Figur 10: eine schematische Darstellung eines erfindungsgemäßen Spreizdübels mit eingedrehter Schraube

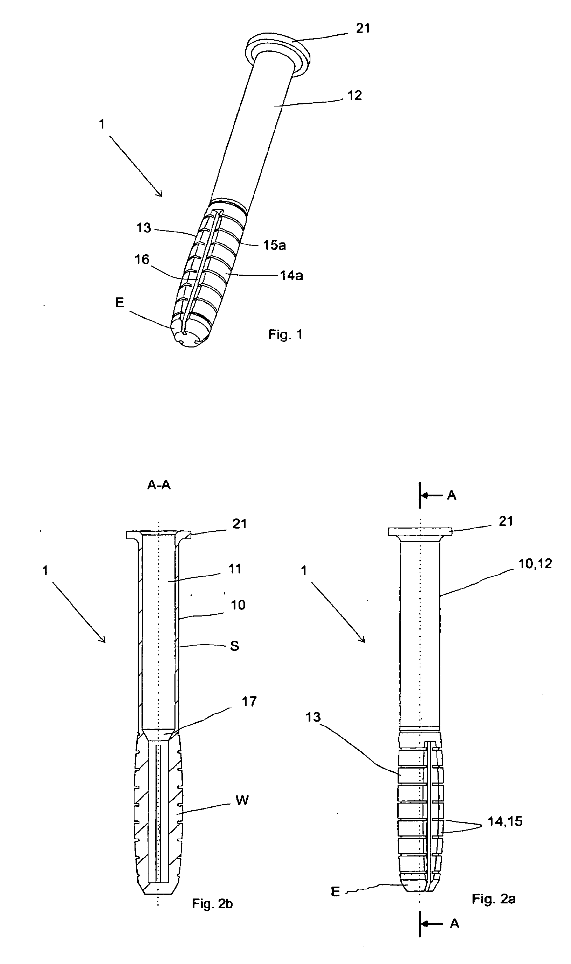

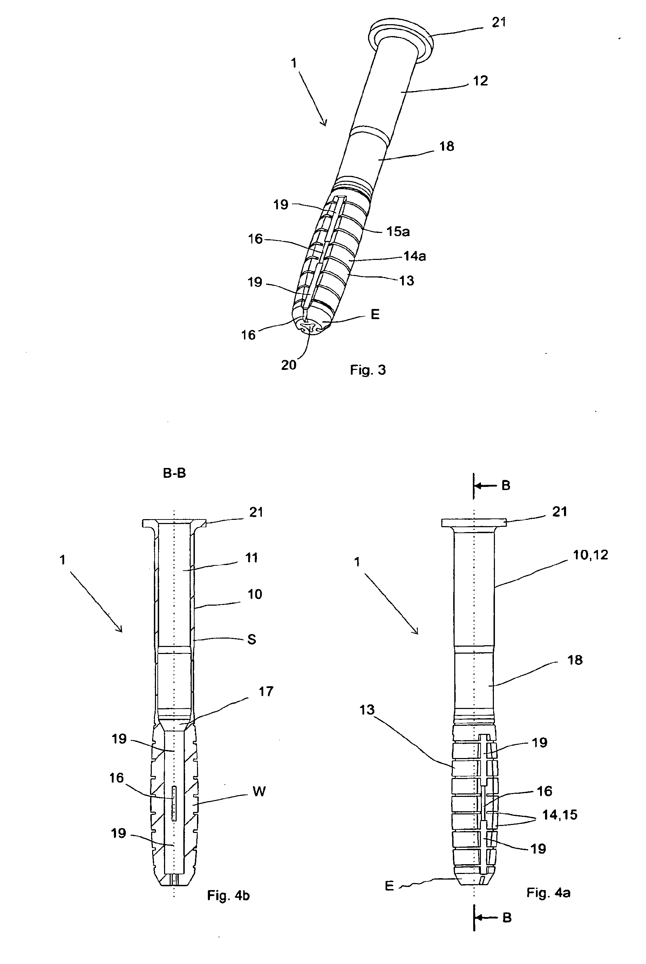

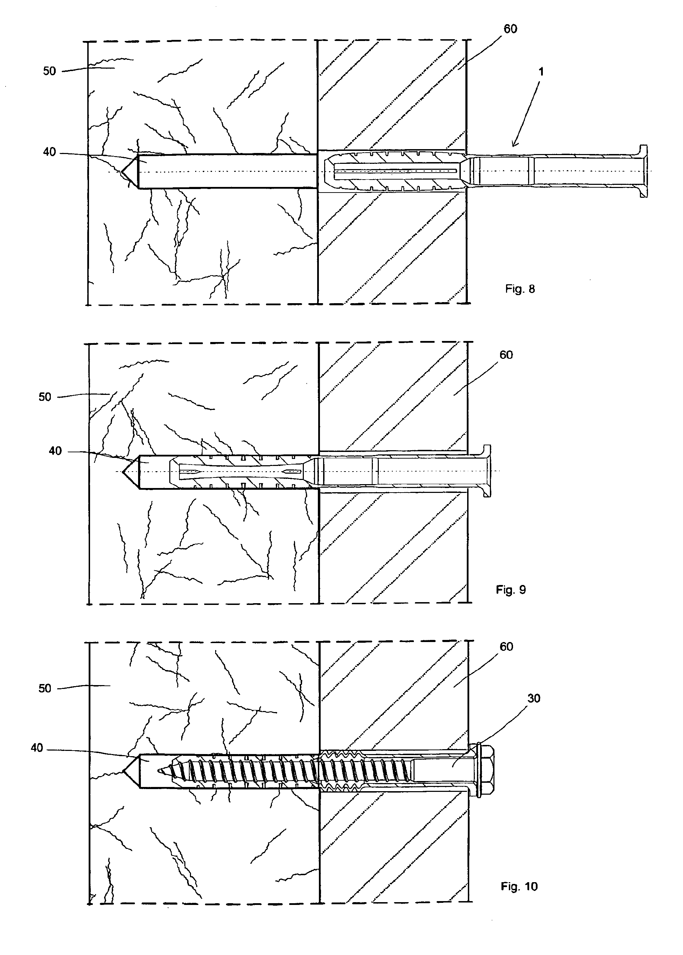

Fig. 1 zeigt die miteinander verbundenen Teile des Spreizdübels 1, der in einer bevorzugten Ausführung in der Fig. 1 bis Fig. 2a näher dargestellt ist. Der erfindungsgemäße Spreizdübel 1 zur Befestigung von unterschiedlichen Baumaterialien und Bauteilen an verschiedenen Untergründen, wie Mauerwerk, Beton, Hohlkammerbausteine umfasst gemäß Fig. 1 einen im wesentlichen rohrförmigen Hülsenkörper 10 mit einem axialen Durchgang 11 für ein Spreizelement 30. Der Hülsenkörper 10 weist an seinem einen axialen Ende einen Schaftteil 12 und an seinem anderen axialen Ende einen Spreizteil 13 auf. Der Spreizteil 13 enthält äußere Umfangsprofilierungen 14, 15, zwischen denen drei sich in Längserstreckung des Spreizteiles über dessen Länge erstreckende Längsschlitze 16 ausgebildet sind, die bis in das konisch ausgebildete Endstück E des Spreizteiles 13 hineinragen zwecks Erzielung einer entsprechenden Spreizwirkung und eines definierten Aufspreizens. Die äußeren Umfangsprofilierungen 14, 15 des Spreizteiles 13 enthalten gleichmäßig voneinander beabstandete ringförmige Verankerungsvorsprünge 14a, zwischen denen ringförmige Nuten 15a ausgebildet sind, wodurch eine getrennte bzw. segmentielle Anlagefläche des Spreizdübels 1 an die ungleichmäßige Innenwand des Bohrloches 40 des Bauntergrundes 50 gegeben ist. Durch die konstruktive Gestaltung entstehen anpassungsfähige Lamellen, die sich unabhängig vom Bauuntergrund 50 anpassen können und eine kraft- sowie formschlüssige Befestigung des Spreizdübels 1 ermöglichen. Nach Figur 3 ist an dem Endstück E des Spreizteiles 13 des Spreizdübels 1 eine mittige Öffnung 20 ausgebildet, die das Durchdringen des Spreizelementes 30 durch das konisch verlaufende Endstück E erleichtert und das Spreizverhalten positiv beeinflusst. Vorzugsweise ist die mittige Öffnung 20 dem Kerndurchmesser der Schraube 30 angepasst. Ferner ist der Spreizteil 13 gemäß Fig. 1 bis Fig. 2b umfangmäßig bauchig ausgebildet, wobei die Wandstärke W des Spreizteiles 13 im Bereich der Ausbauchung zunimmt. Der bauchige Spreizteil 13 bzw. seine bauchige Spreizzone besitzen in ihrer Ausgangsform einen größeren Durchmesser als der Durchmesser des Bohrloches 40 im Bauuntergrund 50 (s. Fig. 8). Das Verhältnis dieser beiden Durchmesser zueinander und die über den Umfang des Spreizteiles 13 verteilte Bauchigkeit bzw. Balligkeit bewirken beim Einstecken des Spreizdübels 1 und Eindrehen, beispielsweise einer Schraube 30 gemäß Fig. 10 einen erhöhten Spreiz- bzw. Anpressdruck an die Bohrlochwandung 40 des Bauuntergrundes 50 und eine optimale Spreizung des Spreizdübels 1. Der bauchige Spreizteil 13 bzw. die bauchig ausgebildeten äußeren Umfangsprofilierungen 14, 15 werden radial nach innen gedrückt bzw. das Material durch den kleineren Bohrdurchmesser des Bauuntergrundes 50 nach innen an die Bohrlochwandung 40 verdrängt. Diese plastische Verformung ermöglicht eine hohe Vorspannung mit der der Spreizdübel 1 im Bohrloch bzw. an der Bohrlochwandung 40 anliegt und bewirkt somit eine Verbesserung der Befestigungseigenschaften des Spreizdübels 1 (s. Fig. 8 bis Fig. 10). Ferner ist nach Fig. 2b an dem Schaftteil 12 ein sich verjüngender konischer Übergangsteil 17 angeformt, der einem verbesserten Einfädeln des Spreizelementes 30 dient. Des Weiteren sind die drei Längsschlitze 16 mit einem Häutchen 19 versehen (s. Fig. 3). Das Häutchen 19 besteht aus einem dünnen Kunststofffilm und kann die Längsschlitze 16 in axialer Richtung teilweise oder ganz schließen und verhindert dadurch das Eindringen von Verunreinigungen, wie Schmutzpartikel des Bauuntergrundes in den Hülsenkörper 10. Vorzugsweise ist das Häutchen 19 bogenförmig ausgebildet, wodurch mehr Materialanhäufung vorhanden ist und sich das Häutchen 19 mehr dehnen kann.

In einer besonders bevorzugten Ausführungsform ist gemäß Fig. 3 bis Fig. 7 der Schaftteil 12 des Spreizdübels 1 zusätzlich mit einem Fixierungsbereich 18 versehen, d.h. der Schaftteil 12 weist zur Bildung des Fixierungsbereiches 18 in diesem Teil eine reduzierte Wandstärke S auf und ist axial verkürzt. Der Fixierungsbereich 18 ist gemäß Fig. 3 im Mittelteil des Schaftteiles 12, vorzugsweise im Übergang zum Übergangsteil 17 ausgebildet und befindet sich wie in Fig. 9 und Fig. 10 dargestellt, außerhalb des Bohrloches 40 des Bauuntergrundes 50. Mit der Ausbildung eines elastischen Fixierungsbereiches 18 im Schaftteil 12 sind Bauteile 60 unterschiedlicher Dicke infolge der gleichzeitigen Verstärkung des Anpressdruckes näher und fester an den Bauuntergrund 50 heranziehbar. Durch den ausgebildeten Fixierungsbereich 18 ist es gelungen, das Bauteil 60 zentrisch um das Spreizelement 30 zu fixieren. Durch die Materialausdünnung bzw. Materialverdünnung des Schaftteiles 12 liegt der Spreizdübel 1 beim Eintreiben bzw. Eindrehen des Spreizelementes 30 infolge der Materialverdrängungen mit einer entsprechenden Vorspannung an der Bohrlochmündung an und bewirkt sowohl eine Verbesserung der Befestigungseigenschaften als auch ein zusätzliches Abdichten des Bauuntergrundes 50 gegen Feuchtigkeit. Infolge der bauchigen Form des Spreizteiles 13, der Anlageflächen und des erzielbaren hohen Anpressdruckes ist ein breites Anwendungsgebiet bezüglich der Befestigung von Bauteilen 60 unterschiedlicher Stärke an Bauuntergründen 50 realisierbar und der Spreizdübel kraft- und formschlüssig im Bauuntergrund 50 befestigbar.

In einer weiteren bevorzugten Ausführung ist der Fixierungsbereich 18 aus einer anderen Materialkomponente ausgebildet. Hierbei kann bei der Fertigung beispielsweise ein Zwei-Komponenten-Material oder Gummi oder Metall eingesetzt werden. Die zum Einsatz kommenden unterschiedlichen Materialien bewirken eine verbesserte plastische Verformung und damit hervorragende Befestigungseigenschaften.

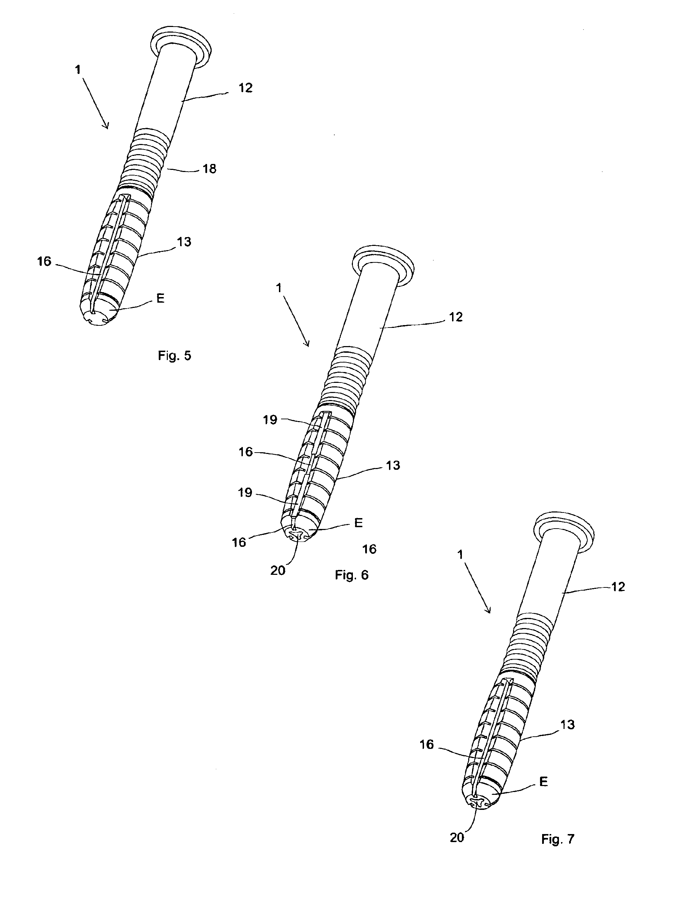

Die Montage des mit einer Ausbauchung im Spreizteil 13 und einem Fixierungsbereich 18 im Schaftteil 12 versehenen Spreizdübels 1 erfolgt gemäß Fig. 8 bis Fig. 10. Durch Eindrehen einer Schraube 30 in den Spreizdübel 1 (s. Fig. 10) wird das rückwärtige Ende des Schaftteiles 12 des Spreizdübels 1 an das zu befestigende Bauteil 60, beispielsweise an eine Platte herangezogen, bis der Kragenteil 21 mit seiner Unterkante an der Platte anliegt. Hierbei wird der Fixierungsbereich 18 plastisch verformt, d.h. das Material verdichtet sich und wird nach außen verdrängt, ohne den Hülsenkörper 10 zu zerstören (s. Fig. 5 und Fig. 10). Mittels des Fixierungsbereiches 18 ist die zu befestigende Platte 60 an den Bauuntergrund 50 bedeutend fester heranziehbar und durch den geringen Widerstand des Hülsenkörpers 10 ein entsprechender Fixierungseffekt der Platte 60 am Bauuntergrund 50 erzielbar.

Der Spreizdübel 1 kann im Vergleich zur Grundvariante universell ausgebildet sein, d.h. eingangsseitig anstelle des Kragenteiles 21 einen Senk- oder Zylinderkopf 21 oder einen Teller 21 und/oder eine universelle Anschlusskupplung 21 enthalten.

### Bezugszeichenliste:

- 1 =: Spreizdübel
- 10 =: Hülsenkörper
- 11 =: axialer Durchgang
- 12 =: Schaftteil
- 13 =: Spreizteil
- 14, 15 =: Umfangsprofilierungen
- 14a =: Verankerungsvorsprünge
- 15a =: Nute
- 16 =: Längsschlitze
- 17 =: konischer Übergangsteil
- 18 =: Fixierungsbereich
- 19 =: Häutchen
- 20 =: mittige Öffnung
- 21 =: Kragenteil
- 30 =: Spreizelement
- 40 =: Bohrloch, Durchmesser des Bohrlochs
- 50 =: Bauuntergrund
- 60 =: Bauteil
- E =: konisches Endstück
- W =: Wandstärke des Spreitzeiles
- S =: Wandstärke des Schaftteiles

## Patentansprüche

1. Spreizdübel (1) zur Befestigung von unterschiedlichen Baumaterialien und Bauteilen an verschiedenen Untergründen, wie Mauerwerk, Beton, Hohlkammerbaustoffe und dergleichen, umfassend einen im wesentlichen rohrförmigen Hülsenkörper (10) mit axialem Durchgang (11) zur Aufnahme bzw. zum Durchstecken eines Spreizelementes (30), wie einer Schraube, eines Ankers und dergleichen, und der Hülsenkörper (10) aus einem Schaftteil (12) und einem Spreizteil (13) ausgebildet ist, wobei das Schaftteil (12) und das Spreizteil (13) jeweils ein axiales Ende des Hülsenkörpers (10) bilden und dass das Spreizteil (13) eine bauchige Außenform aufweist, wobei die Wandstärke (W) des Spreizteiles (13) von seinen Enden in axialer Richtung zur Mitte hin die Ausbauchung bildend zunimmt, **dadurch gekennzeichnet, dass** der Spreizteil (13) ein konisch verlaufendes Endstück (E) aufweist sowie dass am Spreizteil (13) äußere Umfangsprofilierungen (14, 15) angeordnet sind, und dass zwischen den Umfangsprofilierungen (14, 15) mindestens zwei sich in Längserstreckung des Spreizteiles (13) über dessen Länge erstreckende Längsschlitze (16) ausgebildet sind, die bis in das Endstück (E) des Spreizteiles (13) hineinragen.

2. Spreizdübel (1) nach Anspruch 1, **dadurch gekennzeichnet, dass** zwischen den Umfangsprofilierungen (14, 15) drei oder fünf gleichmäßig über den Umfang verteilte sich in Längserstreckung des Spreizteiles (13) über dessen Länge erstreckende Längsschlitze (16) vorgesehen sind, und dass die Längsschlitze (16) bis in das Endstück (E) des Spreizteiles (13) hineinragen.

3. Spreizdübel (1) nach Anspruch 2, **dadurch gekennzeichnet, dass** die äußeren Umfangsprofilierungen (14, 15) des Spreizteiles (13) gleichmäßig voneinander beabstandete ringförmige Verankerungsvorsprünge (14a) enthalten, zwischen denen ringförmige Nuten (15a) ausgebildet sind.

4. Spreizdübel (1) nach einem der Ansprüche 1 bis 3, **dadurch gekennzeichnet, dass** der Schaftteil (12) mindestens so lang wie der Spreizteil (13) ausgebildet ist.

5. Spreizdübel (1) nach einem der Ansprüche 1 bis 3, **dadurch gekennzeichnet, dass** der Schaftteil (12) kürzer als der Spreizteil (13) ausgebildet ist.

6. Spreizdübel (1) nach einem der Ansprüche 1 bis 5, **dadurch gekennzeichnet, dass** die sich in Längserstreckung des Spreizteiles (13) über dessen Länge erstreckenden Längsschlitze (16) mit einem Häutchen (19) versehen sind, das die Längsschlitze (16) teilweise oder ganz schließt.

7. Spreizdübel (1) nach einem der Ansprüche 1 bis 6, **dadurch gekennzeichnet, dass** der Spreizteil (13) an seinem Endstück (E) eine mittige Öffnung (20) aufweist, und dass die mittige Öffnung (20) dem Kerndurchmesser des Spreizelementes (30) angepasst ausgebildet ist.

8. Spreizdübel (1) nach einem der Ansprüche 1 bis 7, **dadurch gekennzeichnet, dass** der Durchmesser des Spreizteiles (13) größer als der Durchmesser des Bohrloches (40) des Untergrundes (50) ist.

9. Spreizdübel (1) nach einem der Ansprüche 1 bis 8, **dadurch gekennzeichnet, dass** der Schaftteil (12) einen Fixierungsbereich (18) aufweist, und dass die Wandstärke (S) des Schaftteiles (12) im Fixierungsbereich (18) abnimmt.

10. Spreizdübel (1) nach einem der Ansprüche 1 bis 9, **dadurch gekennzeichnet, dass** an dem Schaftteil (12) im Übergang vom Fixierungsbereich (18) zum Spreizteil (13) ein sich verjüngender konischer Übergangsteil (17) ausgebildet ist, der einem verbesserten Einfädeln des Spreizelementes (30) dient.

11. Spreizdübel (1) nach einem der Ansprüche 1 bis 10, **dadurch gekennzeichnet, dass** der Fixierungsbereich (18) im Mittelteil des Schaftteiles (12), vorzugsweise im Übergang zum Übergangsteil (17) ausgebildet ist.

12. Spreizdübel (1) nach Anspruch 10 oder 11, **dadurch gekennzeichnet, dass** der Fixierungsbereich (18) des Schaftteiles (12) aus Gummi oder aus Metall besteht.

13. Spreizdübel (1) nach einem der Ansprüche 1 bis 12, **dadurch gekennzeichnet, dass** das Häutchen (19) bogenförmig ausgebildet ist.

14. Spreizdübel (1) nach einem der Ansprüche 1 bis 13, **dadurch gekennzeichnet, dass** an dem Schaftteil (12) eingangsseitig ein seitlich vorstehender Kragenteil (21) oder ein Senkkopfteil (21) oder ein Zylinderkopfteil (21) oder ein Teller und/oder eine universelle Anschlusskupplung (21) angeformt ist.

## Claims

1. Straddling dowel (1) for fixing different building materials and components to various substrates, such as masonry, concrete, hollow building materials and the like, comprising a substantially tubular sleeve body (10) with an axial passageway (11) for receiving and for the insertion of an expansion element (30), such as a screw, anchor or the like, wherein the sleeve body (10) is formed of a shank part (12) and a spreading part (13), wherein said shank part (12) and said spreading part (13) each form an axial end of the sleeve body (10) and the spreading part (13) exhibits a bulbous outer shape, wherein the wall thickness (W) of the spreading part (13) increases from the ends thereof in an axial direction towards the center so as to form the bulge,
**characterized in that** the spreading part (13) exhibits a conically converging end piece (E), and that outer circumferential profiles (14, 15) are disposed at the spreading part (13), and that at least two longitudinal slots (16) extending in the longitudinal direction of the spreading part (13) over the length thereof are formed between the circumferential profiles (14, 15) and protrude into the end piece (E) of the spreading part (13).

2. Straddling dowel (1) according to claim 1,
**characterized in that** three or five longitudinal slots (16) being uniformly distributed along the circumference and extending in the longitudinal direction of the spreading part (13) over the length thereof are provided between the circumferential profiles (14, 15), and said longitudinal slots (16) protrude into the end piece (E) of the spreading part (13).

3. Straddling dowel (1) according to claim 2,
**characterized in that** the outer circumferential profiles (14, 15) of the spreading part (13) comprise annular anchoring projections (14a) which are uniformly spaced apart from each other and between which annular grooves (15a) are formed.

4. Straddling dowel (1) according to any of claims 1 to 3,
**characterized in that** the shank part (12) is designed at least as long as the spreading part (13).

5. Straddling dowel (1) according to any of claims 1 to 3, **characterized in that** the shank part (12) is designed so as to be shorter than the spreading part (13).

6. Straddling dowel (1) according to any of claims 1 to 5,
**characterized in that** the longitudinal slots (16) extending in the longitudinal direction of the spreading part (13) over the length thereof are provided with a pellicle (19) which partially or completely closes the longitudinal slots (16).

7. Straddling dowel (1) according to any of claims 1 to 6,
**characterized in that** the spreading part (13) at the end piece (E) thereof exhibits a central opening (20), wherein said central opening (20) is configured so as to match with the core diameter of the expansion element (30).

8. Straddling dowel (1) according to any of claims 1 to 7,
**characterized in that** the diameter of the spreading part (13) is greater than the diameter of the bore hole (40) of the substrate (50).

9. Straddling dowel (1) according to any of claims 1 to 8,
**characterized in that** the shank part (12) features a fixing area (18) and the wall thickness (S) of the shank part (12) decreases in the fixing area (18).

10. Straddling dowel (1) according to any of claims 1 to 9,
**characterized in that** a conically-tapered transition piece (17) is formed at the shank part (12) in the transition zone from the fixing area (18) towards the spreading part (13) and serves the purpose of enhanced straddling of the expansion element (30).

11. Straddling dowel (1) according to any of claims 1 to 10,
**characterized in that** the fixing area (18) is formed in the central section of the shank part (12), preferably in the transition zone towards the transition piece (17).

12. Straddling dowel (1) according to claim 10 or 11,
**characterized in that** the fixing area (18) of the shank part (12) is composed of rubber or metal.

13. Straddling dowel (1) according to any of claims 1 to 12,
**characterized in that** the pellicle (19) is formed with an arcuate shape.

14. Straddling dowel (1) according to any of claims 1 to 13,
**characterized in that** a laterally protruding collar part (21) or a countersunk head piece (21) or a cylinder head piece (21) or a disk and/or a universal coupling (21) is formed at the input side of the shank part (12).

## Revendications

1. Cheville à expansion (1) destinée à la fixation de différents matériaux de construction et de composants à divers substrats tels que la maçonnerie, du béton, des matériaux de construction creux ou d'autres substrats semblables, comprenant un corps de douille (10) sensiblement tubulaire avec un passage axial (11) pour la réception et l'insertion d'un élément d'expansion (30) tel qu'un vis, une ancre ou d'autres éléments semblables, dans laquelle le corps de douille (10) est constitué d'une partie tige (12) et d'une partie d'expansion (13), la partie tige (12) et la partie d'expansion (13) chacune formant une extrémité axiale du corps de douille (10) et la partie d'expansion (13) présente une forme extérieure bulbeuse, dans laquelle l'épaisseur de la paroi (W) de la partie d'expansion (13) s'augmente à partir de ses extrémités dans une direction axiale vers le centre de manière a former le bourrelet,
**caractérisée en ce que** la partie d'expansion (13) présente une pièce terminale (E) convergeant de manière conique, et **en ce que** des profilés circonférentiels extérieurs (14, 15) sont disposés à la partie d'expansion (13), et **en ce qu'**au moins deux fentes longitudinales (16) s'étendant dans la direction longitudinale de la partie d'expansion (13) sur la longueur de celle-ci sont formées entre les profilés circonférentiels (14, 15) et font saillie dans la pièce terminale (E) de la partie d'expansion (13).

2. Cheville à expansion (1) selon la revendication 1,
**caractérisée en ce que** trois ou cinq fentes longitudinales (16) étant distribuées uniformément le long de la circonférence et s'étendant dans la direction longitudinale de la partie d'expansion (13) sur la longueur de celle-ci sont pourvues entre les profilés circonférentiels (14, 15), et **en ce que** lesdites fentes longitudinales (16) font saillie dans la pièce terminale (E) de la partie d'expansion (13).

3. Cheville à expansion (1) selon la revendication 2,
**caractérisée en ce que** les profilés circonférentiels extérieurs (14, 15) de la partie d'expansion (13) comprennent des saillies d'ancrage (14a) annulaires étant espacées l'une de l'autre de manière uniforme et ayant des rainures annulaires (15a) formées entre celles-ci.

4. Cheville à expansion (1) selon l'une quelconque des revendications 1 à 3, **caractérisée en ce que** la partie tige (12) est conçue au moins aussi longue que la partie d'expansion (13).

5. Cheville à expansion (1) selon l'une quelconque des revendications 1 à 3, **caractérisée en ce que** la partie tige (12) est conçue plus courte que la partie d'expansion (13).

6. Cheville à expansion (1) selon l'une quelconque des revendications 1 à 5,
caractérisée en que que les fentes longitudinales (16) s'étendant dans la direction longitudinale de la partie d'expansion (13) sur la longueur de celle-ci sont pourvues d'une pellicule (19) renfermant partiellement ou complètement les fentes longitudinales (16).

7. Cheville à expansion (1) selon l'une quelconque des revendications 1 à 6,
**caractérisée en ce que** la partie d'expansion (13) au niveau de la pièce terminale (E) de celle-ci présente une ouverture centrale (20), ladite ouverture centrale (20) étant conçue de manière à correspondre avec le diamètre central de l'élément d'expansion (30).

8. Cheville à expansion (1) selon l'une quelconque des revendications 1 à 7,
**caractérisée en ce que** le diamètre de la partie d'expansion (13) est plus grand que le diamètre de l'alésage (40) du substrat (50).

9. Cheville à expansion (1) selon l'une quelconque des revendications 1 à 8,
**caractérisée en ce que** la partie tige (12) présente une zone de fixation (18) et l'épaisseur de la paroi (S) de la partie tige (12) se diminue dans la zone de fixation (18).

10. Cheville à expansion (1) selon l'une quelconque des revendications 1 à 9,
**caractérisée en ce qu'**une pièce de transition (17) de forme conique est formée au niveau de la partie tige (12) dans la zone de transition à partir de la zone de fixation (18) vers la partie d'expansion (13) servant pour l'amélioration de l'introduction de l'élément d'expansion (30).

11. Cheville à expansion (1) selon l'une quelconque des revendications 1 à 10,
caractérisée en que que la zone de fixation (18) est formée dans la section centrale de la partie tige (12), de préférence dans la zone de transition vers la pièce de transition (17).

12. Cheville à expansion (1) selon la revendication 10 ou 11,
**caractérisée en ce que** la zone de fixation (18) de la partie tige (12) est constituée de caoutchouc ou d'un métal.

13. Cheville à expansion (1) selon l'une quelconque des revendications 1 à 12,
**caractérisée en ce que** la pellicule (19) est conçue de forme arquée.

14. Cheville à expansion (1) selon l'une quelconque des revendications 1 à 13,
**caractérisée en ce qu'**une partie de col (21) faisant saillie latéralement ou une pièce de tête fraisée (21) ou une pièce de tête de cylindre (21) ou une disque et/ou un accouplement universel (21) sont formés sur le côté d'entrée de la partie tige (12).
